# EUROPEAN PATENT SPECIFICATION

(11) **EP 0 409 264 B1**
(45) Date of publication and mention of the grant of the patent: **26.04.1995**
(21) Application number: 90113958.4
(22) Date of filing: 20.07.1990
(51) Int. Cl.: F02M 47/02

(54) **High pressure fuel injection unit for internal combustion engine**
Hochdruck-Kraftstoffeinspritzeinheit für eine Brennkraftmaschine
Ensemble d'injection de carburant à haute pression pour moteur à combustion interne

(30) Priority: 21.07.1989 JP 189333/89
(43) Date of publication of application: 23.01.1991
(73) Proprietor: YAMAHA HATSUDOKI KABUSHIKI KAISHA, Iwata-shi Shizuoka-ken, 438 (JP)
(72) Inventor: Taue, Jun, Iwata-shi, Shizuoka-ken (JP)
(74) Representative: Grünecker, Kinkeldey, Stockmair & Schwanhäusser Anwaltssozietät

(56) References cited:
- EP-A- 0 228 578
- US-A- 4 566 416
- US-A- 4 719 889

## Description

This invention relates to control method for controlling the fuel injection of a fuel injection unit and to a high pressure fuel injection unit suitable for eg. high speed diesel engines. Specifically the present invention relates to improvements of fuel-pressure injection-amount characteristics for making it possible to elevate the injection amount control accuracy during low speed engine rotation and to secure the maximum injection amount required during high speed engine rotation.

### Prior Art

So-called accumulator type high pressure fuel injection units employable on e.g., high speed diesel engines are well known (see e.g., Japanese Provisional Patent Publication H1-36971 or EP-A-0 228 578). Such an accumulator fuel injection unit comprises a casing which is partitioned by a partition plate into an accumulator chamber and a valve chamber, wherein a back pressure chamber constituted of a small chamber is formed within the partition plate, wherein the above back pressure communicates with the above accumulator chamber and the above-mentioned valve chamber through a communication hole and an orifice respectively. An injection valve body for opening/closing the injection nozzle with its front end is disposed within the above accumulator chamber and the above valve body is kept urged by an urging spring in a direction for closing the above nozzle, while the rear end of the above injection valve body faces the above back pressure chamber. Further an electromagnetic valve for opening/closing the above orifice is installed within the above valve chamber.

With the above prior-art unit, when the above electromagnetic valve closes the above orifice, a back pressure works on the rear end face of the injection valve body, and with the result of the above back pressure, the fuel pressure and the urging force of the above urging spring, the injection valve body is urged to the closing side and closes the injection nozzle. On the other hand, when the electromagnetic valve opens the above orifice, the above back pressure is removed and the above injection valve is retracted by the fuel pressure against the urging force of the urging spring, thereby opening the injection valve.

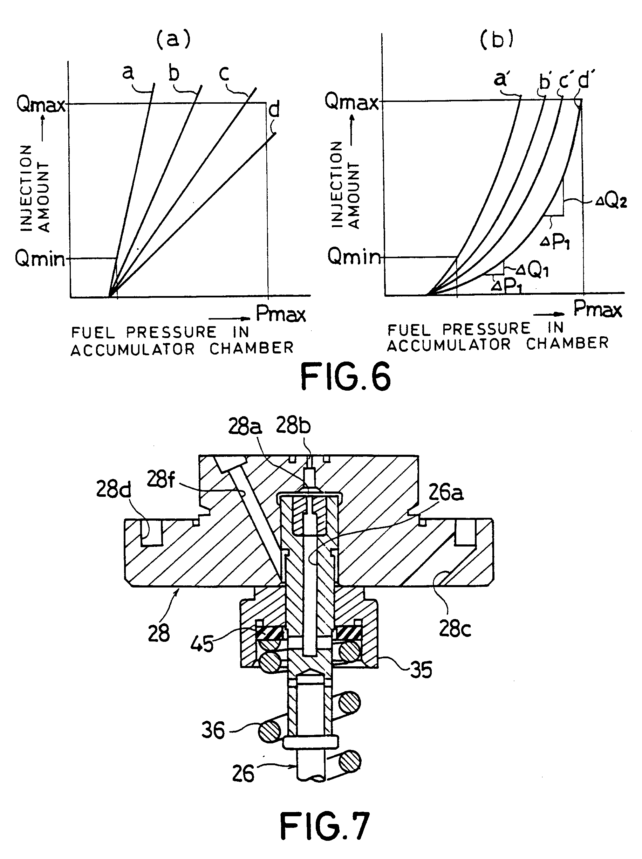

However, inherent to the above prior-art accumulator type fuel injection unit, there is the problem that it is difficult to obtain a satisfactory injection amount control accuracy particularly during low speed engine rotation so that idling of the engine is apt to become unstable. This point is illustrated in figure 6(a) showing accumulator chamber fuel pressure to fuel injection amount characteristic curves d-a. In figure 6(a) curves d to a show characteristics corresponding, one after another to successively lower rotational speeds at which the injection duration per cycle is successively longer. As seen, the lower the engine rotational speed, the steeper are these characteristics curves which means, that the relationship between the fuel pressure and the injection amount is more sensitive. Accordingly, when the injection amount is set at Qₘᵢₙ along the characteristics curve a, that is when idling adjustment is done, the injection amount remarkable fluctuates with a slight change of the set pressure, so that the idling adjustment will become difficult and unstable after all.

To resolve the above problem, it is conceived to make gentle the slope of the characteristics curve by increasing the set load of the urging spring for the above injection valve body. However, with such a structure, the characteristics curve during high speed engine rotation when fuel injection duration per cycle is shorter becomes more gentle and the injection amount does not reach the required maximum injection amount Qₘₐₓ even when the fuel pressure is at the highest allowable pressure Pₘₐₓ, which makes the engine operating range narrower.

This invention has been made taking the above existing problem into consideration to provide a high pressure fuel injection unit and a control method for same through which the required maximum injection amount can be secured, the slope of the fuel-pressure injection-amount characteristics can be gentle during low speed rotation, and the control accuracy can be improved.

According to the present invention the afore-mentioned objectives are achieved by a control method for controlling the fuel injection of a fuel injection unit and a high pressure fuel injection unit as indicated in claims 1 and 2, respectively.

Due to the high pressure injection unit according to the invention, since it is provided with an injection amount control means for enlarging ΔQ/ΔP (to be referred to as "injection amount increment ratio" hereinafter) as the fuel pressure become higher, the fuel-pressure injection-amount characteristics curves become gentle on the low speed side and become steep on the high speed side as shown in figure 6(b). Accordingly, the characteristics curve a' (figure 6(b)) becomes more gentle than curve (a) as shown in figure 6(a) even during low speed rotation when the injection duration per cycle is longer. That means the injection amount will not change very much until the fuel pressure is changed to some significant extent which renders the control accuracy higher and the indling adjustment much easier. On the other hand, since the injection amount increment ratio (ΔQ/ΔP) becomes large as the fuel pressure becomes higher, the required maximum injection amount Qₘₐₓ can be secured, within a fuel pressure range not exceeding the highest allowable pressure Pₘₐₓ even during high speed rotation (curve d' in figure 6 b) when the injection duration per cycle is shorter.

According to a preferred embodiment, the inventive injection amount control means can be realised by making the set load of an urging spring smaller which urges the injection valve body installed within the accumulator chamber to the closing side as the fuel pressure becomes higher. More specifically, such means can be realised by interposing, between said urging spring and its spring seat a member which contracts as the pressure within the accumulator chamber becomes higher.

Further preferred embodiments of the present invention are laid down in the other subclaims.

In the following the present invention is described with reference to drawings which illustrate one embodiment of a high pressure fuel injection unit for high speed diesel engines. Among these figures
figures 1 and 2 are sectional side views respectively,
figure 3 is an enlarged view of the injection amount control means,
figure 4 is an enlarged view of the injection nozzle portion
figure 5 is a schematical structural diagram of a fuel supply system incorporating the fuel injection unit of the invention,
figure 6 (a) and 6 (b) are fuel pressure injection amount characteristic diagrams for fuel injection units according to the prior art and the present invention respectively and
figure 7 is an enlarged view showing a modified embodiment of the inventive injection amount control means.

### Description of Preferred Embodiment

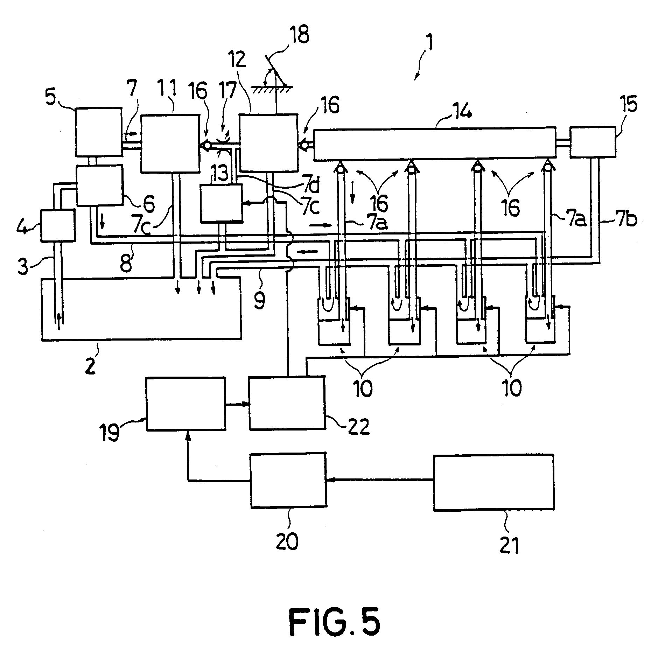

In figure 5 showing the overall structure, the reference number 1 denotes a fuel supply system incorporating a fuel injection unit of this embodiment in which a high pressure pump 5 and a feed pump 6 are connected to the fuel tank 2 of this system 1 by a fuel suction pipe 3 through a filter 4. The above high pressure pump 5 is for supplying each fuel injection unit 10 with high pressure fuel, and a high pressure regulator 11, a low pressure regulator 12 and a separator 14 are connected between the above pump 5 and the fuel injection unit 10 through a high pressure pipe 7.

The above high pressure regulator 11 is employed to adjust the fuel pressure of the high pressure fuel to the predetermined set pressure while reserving it primarily and relieving it of pressure fluctuation, and the above low pressure regulator 12 is employed to adjust the fuel pressure to a lower level, the farther the accelerator pedal 18 is depressed, the higher the engine speed becomes. Both regulators 11 and 12 are connected with the fuel tank 2 through respective return pipes 7c.

Between the above high pressure regulator 11 and the low pressure regulator 12 a throttle valve 17 (is connected) for absorbing pressure fluctuation of the fuel from the above high pressure regulator 11. To the exits of both regulators 11 and 12 and to the connections of the above separator 14 with branch passages 7a branching therefrom are connected check valves 16 for preventing pressure waves from flowing back from the downstream side.

The reference number 13 denotes a pressure relief valve connected midway in a bypass passage 7d between the downstream side of the above throttle valve 17 and the fuel tank 2 for relieving the pressure within the high pressure pipe 7 while the engine is stopped. The number 15 denotes a safety valve for protecting this fuel supply system 1 from an abnormally higher fuel pressure by relieving the fuel pressure toward the fuel tank 2 through return pipes 7b and 9 when the fuel pressure is in excess of the predetermined limit.

The reference number 19 denotes a controller for sending driving signals to the electromagnetic valve (to be described later) for each of the above fuel injection units 10 and opening/closing signals to the above pressure relief valve 13. When various signals indicating the operating conditions of the engine, e.g., engine speed, throttle valve opening, water temperature, oil temperature, fuel temperature, etc., the operating condition sensors 21 are inputted through an interface 20. This controller 19 reads out necessary pulse width, fuel pressure, etc., from the incorporated map, and outputs them to the driver 22, which in turn drives the above electromagnetic valves, etc., according to these driving signals.

The above feed pump 6 is connected to the valve chamber (to be described later) of each of the above fuel injection units 10 through a circulation pipe 8, and the above valve chamber is connected to the fuel tank 2 through a return pipe 9 forming a fuel circulation system for circulating fuel between the above valve chamber and the fuel tank 2.

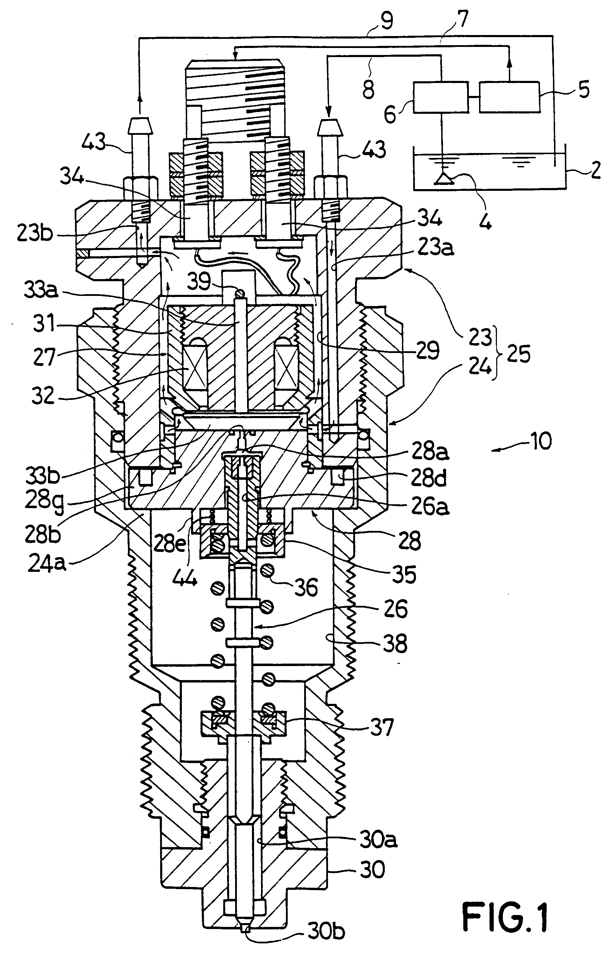

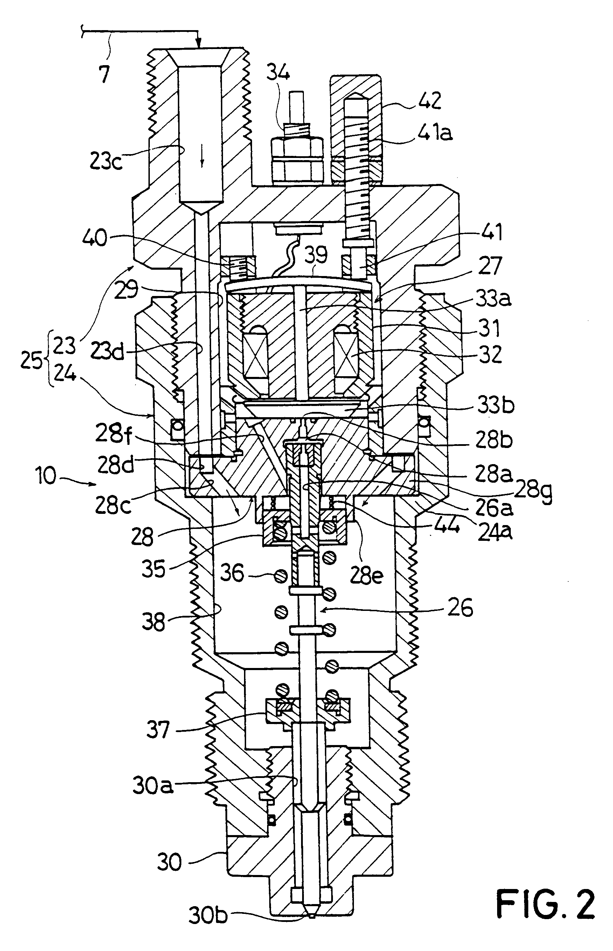

In figures 1 - 4 showing the internal structure of the above fuel injection unit 10, this fuel injection unit 10 has a structure in which its casing 25 is partitioned by a partition plate 28 into a valve chamber 29 and an accumulator chamber 38, wherein an injection valve body 26 and an electromagnetic valve 27 are accomodated and disposed within the accumulator chamber 38 and the valve chamber 27 respectively.

The above casing 25 is composed of a bottomed cylindrical inner case 23 and a cylindrical outer case 24 provided with a nozzle cap 30 screwed into its lower (as shown) end and having the above inner case 23 screwed into its upper end.

The above partition plate 28 is disc-shaped, and its flange portion 28g is held between the step portion 24a of the above outer case 24 and the lower (as shown) end of the above inner case 23. The above accumulator chamber 38 communicates with the above high pressure pipe 7 through a fuel supply hole 28c formed throuh the partition plate 28, a ring-shaped groove 28d, and fuel introducing holes 23d and 23c formed through the above inner case 23.

Further, the above partition plate 28 has a back pressure chamber 28a which is a cylindrical space having a small diameter formed through its axis portion and communicating with the above valve chamber 29 through an orifice 28b. Into this back pressure chamber 28a is slidably inserted the upper end portion of the above injection valve body 26, and through a communication passage 26a formed through the above upper end portion, the above back pressure chamber 28a and the above accumulator chamber 38 communicate with each other.

The above electromagnetic valve 27 is of a structure in which a ring-shaped coil 32 is disposed within a holder 31 which can be disassmebled into an inside portion and an outside portion, while a valve stem 33a is slidably inserted into the axis of the above holder 31. The lower end portion of the above holder 31 is fitted and fastened on the outer periphery of the upper half of the above partition plate 28, and a valve plate 33b formed integrally with and at the lower end of the above valve stem 33a is adapted to open/close the above orifice 28b for communicating the above back pressure chamber 28a with the above valve chamber 29. The upper end face of the above valve stem 33a is abutted with a pushing spring 39, one end of which is positioned on the holder 31 by a positioning pin 40 and the other end of which is pushed down by an adjusting rod 41. This adjusting rod 41 has its lower end screwed into the inner case 23 and its upper end projected outward, and a cap 42 is mounted on the above projected portion. The pushing force of the above pushing spring 39 can be adjusted by turning this adjusting rod 41 from outside the casing 25. The reference number 34 denotes external connecting terminals for applying electric potential on the above coil 32, the terminals being mounted, with sealing, through the upper end portion of the above inner case 23.

Extending axially through the surrounding wall of the above inner case 23 an introducing passage 23a and the discharge passage 23b are formed, the former 23a being communicated with the above valve chamber 29 near its bottom through an annular groove and through holes formed through the outer periphery of lower end portion of the above holder 31, and the latter 23b being communicated with the above valve chamber 29 near its upper end. Further, the above introducing passage 23a and the discharge passage 23b are connected with the above circulation pipe 8 through a connecting pipe 43a and with the above return pipe 9 through a connecting pipe 43b respectively, forming a fuel circulation system between the fuel tank 2 and the valve chamber 29 as described above.

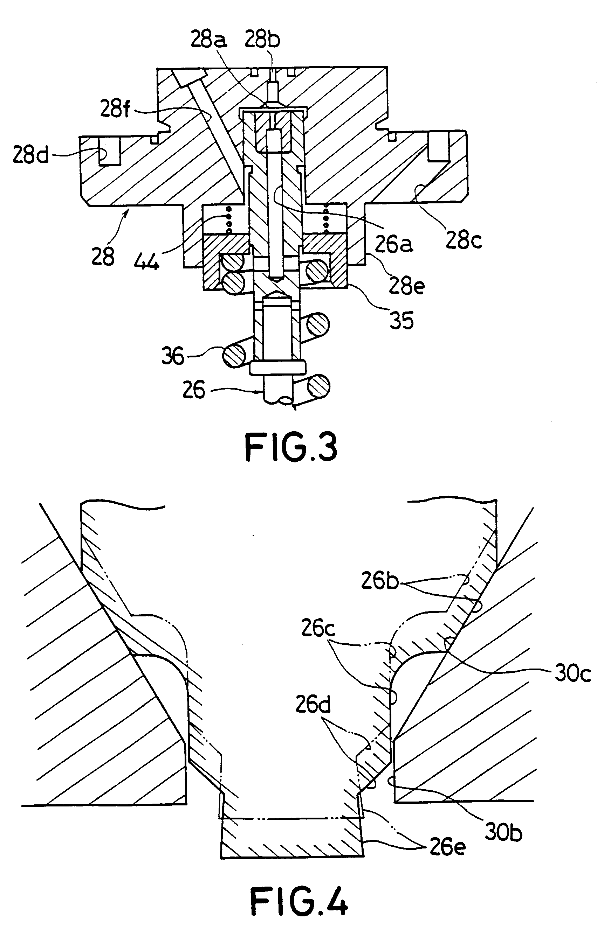

The lower portion of the above injection valve body 26 is slidably inserted into the guide hole 30a formed through the above nozzle cap 30, and its front end portion is adapted to open/close the injection nozzle of the above nozzle cap 30 as shown in figure 4. That is, the lower end portion of the injection valve body 26 is composed of a tapered sealing portion 26b, a straight portion 26c, a tapered throttle portion 26d, and a tapered portion 26e of which the diameter is increasing from top to bottom, as shown in figure 4. All these positions are formed successively in this order, and the injection nozzle of the nozzle cap 30 is of a structure in which a nozzle hole 30b, into which is inserted the above straight portion 26c leaving a slight gap, is formed at the tip end of the tapered-hole-shaped sealing portion 30c. Accordingly, with the travel of the injection valve body 26 in opening direction, the injection opening area which is as small as only the gap between the above straight portion 26c and the nozzle hole 30b during the first half of the valve body travel is enlarged to the gap between the nozzle hole 30b and the throttle portion 26d or tapered portion 26e during the latter half of the valve body travel.

Further, the above injection valve body 26 has a lower spring seat 37 mounted and fastened near its middle, and the above partition plate 28 has an upper spring seat 35 slidably mounted near its lower face. This upper spring seat 35 is slidably inserted in a guiding cylinder 28e formed integrally with the partition plate 28 at its lower face. Between this upper spring seat 35 and the lower face of the partition plate 28 is interposed a control spring 44 as an injection amount control means. Being separated from the above accumulator chamber 38 by the guiding cylinder 28e and the upper spring seat 35 , and being communicated with the above valve chamber 29 through an escape hole 28b formed through the partition plate 28, the space in which the above control spring 44 is disposed, is at a pressure far lower than that in the accumulator chamber 38. Accordingly, the above injection valve body 26 will be urged in closing direction as a result of the urging forces of this control spring 44 and the above urging spring 36.

The action and the effect of this embodiment is now described.

The high pressure fuel from the high pressure pump 5, after regulation to a predetermined pressure through the high pressure regulator 11 and the low pressure regulator 12, is supplied into the accumulator chamber 38 of each fuel injection unit 10 through a separator 14. While the electromagnetic valve 27 is not energised, the orifice 28b is kept closed by the valve plate 33b, which causes the pressure within the back pressure chamber 28a to work on the upper end face of the injection valve body 26 as a back pressure, whereupon the above injection valve body 26 is urged downward by the above back pressure, the fuel pressure within the accumulator chamber 38, and the resultant urging forces of urging spring 36 and the control spring 44, its sealing portion 26b is pressed against the sealing portion 30c, and fuel is not injected.

When the electromagnetic valve 27 is energised, the valve plate 33b is lifted to open the orifice 28b, which causes the high pressure fuel within the back pressure chamber 28a to flow out through the orifice 28b into the valve chamber 29. Accordingly, the pressure within the back pressure chamber 28a rapidly drops by which the above back pressure is eliminated. Consequently, the injection valve body 26 is retracted by the fuel pressure against the resultant urging forces of urging spring 36 and the control spring 44, the above sealing portions 26b and 30c of the injection nozzle are separated from each other, and the fuel is injected through the gap between the nozzle hole 30b and the straight portion 26c while the travel of the injection valve body is small and then through the gap between the nozzle hole 30b and the tapered portion 26e when the travel of the injection valve body has become larger.

Hereupon, when the fuel pressure within the accumulator chamber 38 rises, the control spring 44 installed between the upper valve seat 35 for the urging spring 36 and the partition plate 28 is compressed and contracted by the movement of the upper spring seat 35, which makes the set load of the urging spring 36 much smaller. Accordingly, the higher the fuel pressure, the weaker the force becomes for urging the injection valve body 26 toward the closing side, and the larger the injection nozzle will be opened. Further, since the lower end of the injection valve body 26 in this embodiment has a specially devised form, its injection opening area is steeply enlarged when the opening travel of the injection valve body exceeds a predetermined value. As the result, as shown in figure 6(b), the injection amount increment ratio ΔQ/ΔP in the fuel-pressure injection-amount characteristics of this embodiment is smaller as ΔQ₁/ΔP₁ when the fuel pressure is low and becomes larger as ΔQ₂/ΔP₁ when the fuel pressure becomes higher.

As described above, since a control spring 44 is installed between the upper spring seat 35 for the urging spring 36 and the partition plate 28 in this embodiment, the higher the fuel pressure, the smaller the set load of the urging spring 36 becomes, and, as the result, the low pressure side slope of the fuel-pressure injection-amount characteristics curve becomes more gentle. Accordingly, the control accuracy can be elevated even during low speed rotation when the injection duration during one injection cycle is longer, and the idling adjustment can be done easily and securely.

Further, on the high pressure side, the above characteristics curve becomes steeper, and the required maximum injection amount Qₘₐₓ can be secured within a fuel pressure range not exceeding the highest allowable pressure Pₘₐₓ even during high speed rotation when the injection duration per cycle is shorter.

Although the case of a coil spring is shown in the above embodiment as an example of the injection amount control means, this means may be such as shown in figure 7 in which, while the upper spring seat 35 is directly abutted with the partition plate 28, a control sheet 45 is installed between the urging spring 36 and the upper spring seat 35.

In this modified embodiment, when the fuel pressure becomes higher the control sheet is more compressed and contracted by the fuel pressure, the set load of the urging spring 36 is reduced, and a fuel-pressure injection-amount characteristics curve similar to one for the above embodiment can be obtained. Further, since it is sufficient only to interpose a control sheet 45, its structure is quite simple.

Since, as explained above, the high pressure injection unit according to the invention is provided with an injection amount control means for enlarging the injection amount increment ratio ΔQ/ΔP, as the fuel pressure becomes higher, the slope of the fuel-pressure injection-amount characteristics curves are more gentle on the low pressure side and steeper on the high pressure side, which is effective for elevating the control accuracy during low speed rotation while securing required maximum injection amount.

## Claims

1. Control method for controlling the fuel injection amount of a fuel injection unit of the accumulator type, the amount of injected fuel being determined in response to the fuel pressure built up within an accumulator chamber of the fuel injection unit and a pre-bias load urging an injection valve body in its closed position,
**characterised in that** non-linear fuel pressure/injection amount - characteristics (a', b', c', d') are adjusted by means of controlling the opening movement of the injection valve body (26) by reducing the pre-bias load of an injection valve return spring arrangement (35,36) in response to an increase of the fuel pressure (P), increasing the amount of fuel injection per injection cycle more than proportionally with respect to an increasing fuel pressure in said accumulator chamber (38).

2. A high pressure fuel injection unit (10) for an engine comprising a casing (25) partitioned by a partition plate (28) into an accumulator chamber (38) into which fuel under high pressure is introduced and a valve chamber (29), said partition plate having a back pressure chamber (28a) formed therein, said back pressure chamber communicating with said accumulator chamber and said valve chamber through a communication hole (26a) and an orifice (28b) respectively, an injection valve body (26) installed within said accumulator chamber to open/close an injection nozzle (30b) with its front end, said injection valve body being pre-biased by an injection valve return spring arrangement, the rear end of said injection valve body facing said back pressure chamber, an electromagnetic valve (27) accommodated within said valve chamber for opening/closing said orifice, said injection nozzle being adapted to be closed through the advance of said injection valve body caused by pressure build-up within said back pressure chamber effected by closing said orifice with said electromagnetic valve, and said injection nozzle being adapted to be opened through the return of said injection valve body caused by pressure relief within said back pressure chamber effected by opening said orifice with said electromagnetic valve specifically to perform the control method as indicated in claim 1,
**characterised in that**
an injection amount control member (44,45) is operatively connected to said injection valve return spring arrangement (35,36) said injection amount control member reducing the pre-bias load of the injection valve return spring arrangement (35,36) in response to an increase of the fuel pressure (P) to adjust non-linear fuel pressure/injection amount - characteristics (a', b', c', d'), increasing the amount of fuel injection per injection cycle more than proportionally with respect to an increasing fuel pressure in the accumulator chamber (38).

3. A high pressure fuel injection unit as claimed in claim 2, **characterised in that** the injection amount control member comprises a control spring (44) interposed between an upper spring seat (35) of the pre-biasing return spring (36) and the partitioning plate (28).

4. A high pressure fuel injection unit as claimed in claims 2 or 3, **characterised in that**, the injection amount control member comprises is a compressable control sheet (45) disposed between an end of the urging return spring (36) and the associated spring seat (35) whereas the spring seat (35) is in abutting engagement with the partitioning plate (28).

## Patentansprüche

1. Steuerverfahren zur Steuerung der Kraftstoffeinspritzmenge einer Kraftstoffeinspritzeinheit vom Sammelkammertyp, wobei die Menge des eingespritzten Kraftstoffes in Abhängigkeit vom Kraftstoffdruck, der innerhalb einer Sammelkammer der Kraftstoffeinspritzeinheit aufgebaut wird, sowie einer Vorspannkraft, die einen Einspritzventilkörper in seine Schließstellung vorspannt, bestimmt wird, **dadurch gekennzeichnet**, daß nicht-lineare Kraftstoffdruck-/Einspritzmengen-Kennlinien (a', b', c', d') durch Steuerung der Öffnungsbewegung des Einspritzventilkörpers (26) durch Verringerung der Vorspannbelastung einer Einspritzventil-Rückstellfederanordnung (35, 36) in Abhängigkeit von einer Zunahme des Kraftstoffdruckes (P) eingestellt werden, zur mehr als proportionalen Erhöhung der Menge der Kraftstoffeinspritzung pro Einspritzzyklus in Bezug auf eine Zunahme des Kraftstoffdruckes in der Sammelkammer (38).

2. Hochdruck-Kraftstoffeinspritzeinheit (10) für einen Motor, mit einem Gehäuse (25), getrennt durch eine Trennplatte (28) in eine Sammelkammer (38), in die Kraftstoff unter hohem Druck eingeführt wird, und eine Ventilkammer (20), wobei in der Trennplatte eine Gegendruckkammer (28a) ausgebildet ist, wobei die Gegendruckkammer mit der Sammelkammer und der Ventilkammer durch eine Verbindungsöffnung (26a) und eine Drosselstelle (28b) jeweils verbunden ist, einem Einspritzventilkörper (26), der innerhalb der Sammelkammer angeordnet ist, um eine Einspritzdüse (30b) mit seinem Vorderende zu öffnen bzw. zu schließen, wobei der Einspritzventilkörper durch eine Einspritzventil-Rückstellfederanordnung vorgespannt ist und das hintere Ende des Einspritzventilkörpers der Gegendruckkammer zugewandt ist, einem Elektromagnetventil (27), das innerhalb der Ventilkammer zum Öffnen bzw. Schließen der Drosselstelle aufgenommen ist, wobei die Einspritzdüse vorgesehen ist, um durch das Verschieben des Einspritzventilskörpers geschlossen zu werden, das durch einen Druckaufbau innerhalb der Gegendruckkammer, bewirkt durch das Schließen der Drosselstelle durch das Elektromagnetventil, bewirkt wird, und wobei die Einspritzdüse vorgesehen ist, um durch die Rückführung des Einspritzventilkörpers geöffnet zu werden, verursacht durch eine Druckentlastung innerhalb der Gegendruckkammer, die durch das Öffnen der Drosselstelle mit dem Elektromagnetventil bewirkt wird, insbesondere zur Ausführung des Steuerverfahrens nach Anspruch 1,
**dadurch gekennzeichnet**, daß ein Einspritzmengen-Steuerteil (44, 45) betrieblich mit der Einspritzventil-Rückstellfederanordnung (35, 36) verbunden ist, wobei das Einspritzmengen-Steuerteil die Vorspannbelastung der Einspritzventil-Rückstellfederanordnung (35, 36 in Abhängigkeit von einer Zunahme des Kraftstoffdruckes (P) vermindert, um nicht-lineare Kraftstoff-/Einspritzmengen-Kennlinien (a', b', c', d') einzustellen, zum überproportionalen Erhöhen der Menge der Kraftstoffeinspritzung pro Einspritzzyklus im Verhältnis zu einer Zunahme des Kraftstoffdruckes in der Sammelkammer (38).

3. Hochdruck-Kraftstoffeinspritzeinheit nach Anspruch 2, **dadurch gekennzeichnet**, daß das Einspritzmengen-Steuerteil eine Steuerfeder (44) ist, die zwischen einem oberen Federsitz (35) der Vorspann-Rückstellfeder (36) und der Trennplatte (28) angeordnet ist.

4. Hochdruck-Kraftstoffeinspritzeinheit nach Anspruch 2 oder 3, **dadurch gekennzeichnet**, daß das Einspritzmengen-Steuerteile eine zusammendrückbare Steuerfolie (45) ist, die zwischen einem Ende der Vorspann-Rückstellfeder (36) und dem zugehörigen Federsitz (35) angeordnet ist, wobei der Federsitz (35) in Anlage mit der Trennplatte (28) ist.

## Revendications

1. Méthode de commande pour commander la quantité de carburant à l'injection d'un ensemble d'injection de carburant de type à accumulation, la quantité de carburant injecté étant déterminée par rapport à la pression établie à l'intérieur d'une chambre d'accumulation de l'ensemble d'injection de carburant et une charge prétarée poussant une aiguille d'injecteur dans sa position fermée,
caractérisée en ce que les caractéristiques non linéaires de pression de carburant en fonction de la quantité de carburant à l'injection (a', b', c', d') sont réglées par des moyens de commande du mouvement d'ouverture de l'aiguille d'injecteur (26) par diminution de la charge pré-tarée d'un dispositif de ressort de rappel d'aiguille d'injecteur (35, 36) en fonction d'un accroissement de la pression de carburant (P), en augmentant la quantité de carburant à l'injection par cycle d'injection plus que proportionnellement à un accroissement de pression de carburant dans ladite chambre d'accumulation (38).

2. Ensemble d'injection de carburant à haute pression (10) pour un moteur comprenant un boisseau (25) divisé par une plaque de séparation (28) en une chambre d'accumulation (38) dans laquelle est introduit le carburant sous haute pression et une chambre à clapet (29), ladite plaque de séparation ayant une chambre de contre-pression (28a) formée en elle, ladite chambre de contre-pression communiquant avec ladite chambre d'accumulation et ladite chambre à clapet respectivement par une ouverture de communication (26a) et un orifice (28b), une aiguille d'injecteur (26) montée à l'intérieur de ladite chambre d'accumulation pour ouvrir et fermer un gicleur (30b) avec son extrémité avant, ladite aiguille d'injecteur étant pré-tarée par un dispositif de ressort de rappel d'aiguille d'injection, l'extrémité arrière de ladite aiguille d'injection faisant face à ladite chambre de contre-pression, une électrovanne (27) disposée à l'intérieur de ladite chambre à clapet pour ouvrir et fermer ledit orifice, ledit gicleur étant adapté pour être fermé par l'avance de ladite aiguille d'injecteur provoquée par l'établissement d'une pression à l'intérieur de ladite chambre de contre-pression réalisée par la fermeture dudit orifice sur ladite électrovanne, et ledit gicleur étant adapté pour être ouvert par le retour de ladite aiguille d'injecteur provoqué par une décompression à l'intérieur de ladite chambre de contre-pression réalisée par l'ouverture dudit orifice avec ladite électrovanne pour mener spécifiquement la méthode de commande comme indiqué dans la revendication 1,
caractérisé en ce que
un élément de commande de quantité de carburant à l'injection (44, 45) est connecté en fonctionnement audit dispositif de ressort de rappel d'aiguille d'injecteur (35, 36), ledit élément de commande de carburant à l'injection diminuant la charge pré-tarée du dispositif de ressort de rappel d'aiguille d'injecteur (35, 36) en réponse à un accroissement de la pression de carburant (P) pour régler les caractéristiques non linéaires de pression de carburant en fonction de la quantité de carburant à l'injection (a', b', c', d') en augmentant la quantité de carburant à l'injection par cycle d'injection plus que proportionnellement à une augmentation de pression de carburant dans la chambre d'accumulation (38).

3. Ensemble d'injection de carburant à haute pression comme revendiqué dans la revendication 2, caractérisé en ce que l'élément de commande de carburant à l'injection comprend un ressort de commande (44) placé entre un siège supérieur de ressort (35) du ressort de rappel de pré-tarage (36) et la plaque de séparation (28).

4. Ensemble d'injection de carburant à haute pression comme revendiqué dans les revendications 2 ou 3, caractérisé en ce que l'élément de commande de carburant à l'injection comprend une plaque de commande (45) compressible placée entre une extrémité du ressort de rappel en pression (36) et le siège de ressort (35) tandis que le siège de ressort (35) s'engage en butée avec la plaque de séparation (28).
